# FASCICULE DE BREVET EUROPEEN

(11) **EP 1 580 068 B1**
(45) Date de publication et mention de la délivrance du brevet: **20.08.2008**
(21) Numéro de dépôt: 05300175.6
(22) Date de dépôt: 10.03.2005
(51) Int. Cl.: B60N 2/64, B60J 5/04

(54) **Poignée de préhension intérieure d'une porte de véhicule automobile**
Innenseitiger Handgriff für ein Kraftfahrzeug
Interior gripping handle for a vehicle door

(30) Priorité: 23.03.2004 FR 0402942
(43) Date de publication de la demande: 28.09.2005
(73) Titulaire: Peugeot Citroën Automobiles S.A., 78140 Vélizy Villacoublay (FR)
(72) Inventeur: Riga, Alessandro, 179 Rue de la Convention, F-75015 Paris (FR)
(74) Mandataire: Fernandez, Francis Lionel

(56) Documents cités:
- EP-A- 1 197 366
- DE-A- 10 154 728
- US-A- 5 504 974
- PATENT ABSTRACTS OF JAPAN vol. 0113, no. 02 (M-629), 2 octobre 1987 (1987-10-02) & JP 62 094435 A (NISSAN MOTOR CO LTD), 30 avril 1987 (1987-04-30)

## Description

La présente invention se rapporte à une poignée intérieure de porte de véhicule automobile.

On connaît de nombreux types de poignée de porte permettant à un passager assis dans le véhicule de tirer la porte pour la fermer.

Les poignées de préhension connues sont constituées d'éléments fixes par rapport à la structure de la porte. Un type de poignée connu est par exemple constitué d'une forme concave ou « bénitier » ménagé dans un accoudoir de la porte, permettant d'y loger les doigts en vue de tirer la porte.

Une telle poignée exige que le passager adapte sa posture, en particulier dans la région du poignet, au fur et à mesure que la porte est entraînée et poursuit son mouvement de fermeture. Au moment de la fermeture, il est particulièrement inconfortable de devoir maintenir les doigts dans cette forme concave pour assurer la fermeture complète de la porte, la main étant alors globalement orientée perpendiculairement au plan de la porte, tandis que l'avant bras est contraint de se disposer de manière sensiblement parallèle au plan de la porte. Cette « cassure » générée au niveau du poignet va à l'encontre des objectifs de confort et d'ergonomie visés pour les véhicules actuels.

D'autres types de poignées de préhension connus constitués d'éléments rigidement liés à la porte imposent également au passager une posture inconfortable dans la région du poignet lors de la fermeture de la porte.

Le document JP 62 094435 A décrit une telle poignée de préhension intérieure d'une porte de véhicule, permettant à un passager du véhicule de tirer la porte pour la fermer, constituée d'un corps allongé, dont l'axe est sensiblement parallèle à l'axe d'articulation de la porte par rapport à la caisse du véhicule.

Le but de la présente invention est de pallier les inconvénients précédents des poignées connues.

A ce titre, l'invention a pour objet une poignée de préhension intérieure d'une porte de véhicule automobile, permettant à un passager du véhicule de tirer la porte pour la fermer, caractérisée en ce qu'elle est constituée d'un corps allongé monté à rotation sur un élément de structure de la porte.

La poignée intérieure de porte selon l'invention peut également comporter une ou plusieurs des caractéristiques suivantes :
- le corps a une forme générale sensiblement cylindrique, son axe de rotation étant parallèle à une génératrice du cylindre,
- l'axe de rotation de la poignée est sensiblement parallèle à l'axe d'articulation de la porte par rapport à la caisse du véhicule,
- l'axe de rotation du corps est sensiblement vertical,
- le corps est relié à sa base à l'élément de structure,
- le corps comporte dans sa partie supérieure une surface arrondie, telle qu'hémisphérique,
- l'élément de structure sur lequel le corps est monté à rotation est la doublure intérieure de la porte et/ou l'accoudoir fixé sur cette dernière,
- le corps est relié à la partie avant de l'accoudoir de la porte.

L'invention a également pour objet un véhicule automobile comprenant une poignée de porte ayant une ou plusieurs des caractéristiques précédentes.

L'invention sera mieux comprise à l'aide de la description ci-après d'un exemple de réalisation non limitatif et à l'examen des dessins annexés sur lesquels :
- la figure 1 représente en perspective la face intérieure d'un caisson de porte de véhicule automobile pourvu d'une poignée de préhension intérieure selon l'invention,
- la figure 2 représente une vue agrandie de la poignée de la figure 1 en situation d'utilisation.

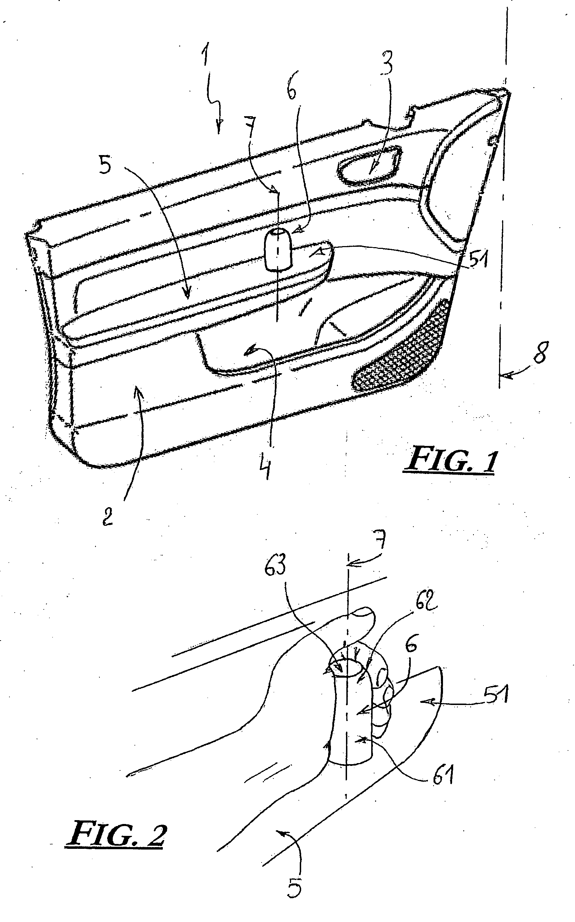

On a représenté à la figure 1 la face intérieure d'un caisson de porte 1 de véhicule automobile. Dans le mode de réalisation présenté dans la description, il est question d'une porte de type battante, articulée dans sa partie avant sur la caisse du véhicule. On comprendra toutefois que l'invention s'étend à d'autres types de portes, par exemple articulées dans leur partie arrière ou dans leur partie supérieure, au pavillon du véhicule.

Le caisson de porte 1 de la figure 1 comprend classiquement une partie de carrosserie extérieure et une partie de carrosserie intérieure (non représentées), cette dernière étant communément appelée doublure intérieure de porte et constituant une structure rigide. Sur sa face intérieure par rapport au véhicule, la doublure de porte est recouverte d'un ou plusieurs éléments de garnissage 2 de porte comportant des zones fonctionnelles diverses, destinées à recevoir divers organes ou équipements de la porte, tels que la commande d'ouverture intérieure (COI) 3 de la porte, un bac à rangement 4, un accoudoir 5, une poignée de préhension 6 intérieure etc. Certains de ces équipements, tels que l'accoudoir 5 sont reliés à la doublure de porte 1 afin d'assurer fermement leur fixation à la structure rigide de la porte. Par extension, on pourra considérer que l'accoudoir 5 constitue également un élément de structure de la porte 1.

De manière classique, la poignée de préhension 6 est supportée par l'accoudoir 5.

Selon l'invention, la poignée de préhension 6 est constitué d'un corps 61 ayant une forme générale sensiblement cylindrique monté à rotation sur un élément de structure de la porte 1, par exemple sur une portion avant 51 de l'accoudoir 5.

L'axe de rotation 7 du corps 6 par rapport à l'accoudoir 5 est sensiblement parallèle à une génératrice du cylindre. Dans le cas d'une architecture classique du véhicule, dans laquelle la porte 1 est articulée dans sa partie avant sur la caisse du véhicule autour d'un axe vertical, on notera que l'axe de rotation 7 du corps 61 par rapport à l'accoudoir 5 ou plus généralement par rapport à la porte 1 est de préférence parallèle à l'axe d'articulation 8 de la porte 1 et donc également vertical.

Comme cela est visible à la figure 1, la surface d'appui de l'accoudoir 5 est sensiblement plane et horizontale, le corps 61 de la poignée 6 formant saillie au-dessus de ladite surface.

Comme cela est représenté à la figure 2, un passager emmanchant la poignée 6 pourra conserver un alignement parfait entre son avant-bras et la direction de sa main refermée sur la poignée 1, tout au long du mouvement de fermeture de la porte 1, y compris dans la phase finale.

Dans sa partie supérieure 62, le corps 61 de la poignée 6 est prolongé par une surface de forme arrondie et éventuellement terminée à son extrémité supérieure par une surface plane 63. La partie supérieure 62 de la poignée offre ainsi un contact ergonomique au passager et peut constituer un objet de délassement lors du déplacement sur route du véhicule, à l'image du pommeau de levier de vitesses dont la forme et la surface sont adaptés à un contact agréable.

On notera également que l'extrémité supérieure de la poignée 6 peut le cas échéant accueillir un ou plusieurs moyens de commande tels que boutons poussoirs associés à des fonctions diverses du véhicule ou de la porte 1.

Par ailleurs, des moyens d'escamotage de la poignée 6 dans l'accoudoir peuvent être prévus pour libérer de la place sur l'accoudoir par exemple lorsque la porte 1 est fermée.

Bien entendu, l'invention n'est pas limitée aux moyens qui viennent d'être décrits et comprend tous les équivalents techniques de ces moyens.

## Revendications

1. Poignée de préhension (6) intérieure d'une porte (1) de véhicule automobile, permettant à un passager du véhicule de tirer la porte (1) pour la fermer, constituée d'un corps (61) allongé, dont l'axe est sensiblement parallèle à l'axe d'articulation (8) de la porte (1) par rapport à la caisse du véhicule, **caractérisé en ce que** le corps est monté à rotation autour de son axe sur un élément de structure de la porte (1).

2. Poignée selon la revendication 1, **caractérisée en ce que** le corps (61) a une forme générale sensiblement cylindrique, son axe de rotation (7) étant parallèle à une génératrice du cylindre.

3. Poignée selon la revendication 1 ou 2, **caractérisée en ce que** l'axe de rotation (7) du corps (61) est sensiblement vertical.

4. Poignée selon la revendication 3, **caractérisée en ce que** le corps (61) est relié à sa base à l'élément de structure.

5. Poignée selon la revendication 3 ou 4, **caractérisée en ce que** le corps (61) comporte dans sa partie supérieure une surface arrondie (62), telle qu'hémisphérique.

6. Poignée selon l'une quelconque des revendications 1 à 5, **caractérisée en ce que** l'élément de structure sur lequel le corps (61) est monté à rotation est la doublure intérieure de la porte (1) et/ou l'accoudoir (5) fixé sur cette dernière.

7. Poignée selon la revendication 6, **caractérisé en ce que** le corps (61) est relié à la partie avant (51) de l'accoudoir (5) de la porte (1).

8. Porte (1) de véhicule automobile, **caractérisée en ce qu'**elle comprend une poignée (6) selon l'une quelconque des revendications précédentes.

## Claims

1. Interior handle (6) for a vehicle door (1), enabling a passenger of the vehicle to pull the door (1) shut, said handle consisting of an elongate body (61) whose axis is essentially parallel to the hinge axis (8) of the door (1) relative to the vehicle body, which handle is **characterized in that** the body is mounted rotatably about its axis on a structural element of the door (1).

2. Handle according to Claim 1, **characterized in that** the body (61) is of essentially cylindrical general form, its axis of rotation (7) being parallel to a generator of the cylinder.

3. Handle according to Claim 1 or 2, **characterized in that** the axis of rotation (7) of the body (61) is essentially vertical.

4. Handle according to Claim 3, **characterized in that** the body (61) is connected at its base to the structural element.

5. Handle according to Claim 3 or 4, **characterized in that** the body (61) has a rounded, for example hemispherical, surface (62) at its top.

6. Handle according to any one of Claims 1 to 5, **characterized in that** the structural element on which the body (61) is rotatably mounted is the interior trim panel of the door (1) and/or the armrest (5) fixed to the latter.

7. Handle according to Claim 6, **characterized in that** the body (61) is connected to the forward part (51) of the armrest (5) of the door (1).

8. Motor vehicle door (1) **characterized in that** it comprises a handle (6) according to any one of the preceding claims.

## Patentansprüche

1. Innenseitiger Handgriff (6) einer Tür (1) eines Kraftfahrzeugs, der es einem Insassen des Fahrzeugs ermöglicht, an der Tür (1) zu ziehen, um sie zu schließen, bestehend aus einem länglichen Körper (61), dessen Achse im Wesentlichen parallel zur Gelenkachse (8) der Tür (1) bezüglich des Fahrzeugaufbaus ist, **dadurch gekennzeichnet, dass** der Körper um seine Achse drehbar auf ein Strukturelement der Tür (1) montiert wird.

2. Handgriff nach Anspruch 1, **dadurch gekennzeichnet, dass** der Körper (61) eine im Wesentlichen zylindrische allgemeine Form hat, wobei seine Drehachse (7) parallel zu einer Mantellinie des Zylinders ist.

3. Handgriff nach Anspruch 1 oder 2, **dadurch gekennzeichnet, dass** die Drehachse (7) des Körpers (61) im Wesentlichen senkrecht ist.

4. Handgriff nach Anspruch 3, **dadurch gekennzeichnet, dass** der Körper (61) an seiner Basis mit dem Strukturelement verbunden ist.

5. Handgriff nach Anspruch 3 oder 4, **dadurch gekennzeichnet, dass** der Körper (61) in seinem oberen Bereich eine abgerundete, zum Beispiel halbkugelförmige Fläche (62) aufweist.

6. Handgriff nach einem der Ansprüche 1 bis 5, **dadurch gekennzeichnet, dass** das Strukturelement, auf das der Körper (61) drehbar montiert ist, das Innenblech der Tür (1) und/oder die auf diesem befestigte Armlehne (5) ist.

7. Handgriff nach Anspruch 6, **dadurch gekennzeichnet, dass** der Körper (61) mit dem vorderen Teil (51) der Armlehne (5) der Tür (1) verbunden ist.

8. Kraftfahrzeugtür (1), **dadurch gekennzeichnet, dass** sie einen Handgriff (6) nach einem der vorhergehenden Ansprüche aufweist.
